# EUROPÄISCHE PATENTANMELDUNG

(11) **EP 1 728 664 A2**
(43) Veröffentlichungstag der Anmeldung: **06.12.2006**
(21) Anmeldenummer: 06008916.6
(22) Anmeldetag: 28.04.2006
(51) Int. Cl.: B60J 5/10

(54) **Heckklappe für ein Kraftfahrzeug**

(30) Priorität: 09.05.2005 DE 102005021306
(71) Anmelder: DURA Automotive Plettenberg Entwicklungs- und Vertriebs GmbH, 58840 Plettenberg (DE)
(72) Erfinder: Heuel, Gerhard, 57462 Olpe (DE); Rau, Dirk, 57413 Finnentrop (DE); Tillman , Peter, 58840 Plettenberg (DE)
(74) Vertreter: Zinnecker, Armin

(57) **Zusammenfassung**

Eine verbesserte Heckklappe für ein Fahrzeug, insbesondere für ein Kraftfahrzeug, umfaßt eine obere Klappe (3), die an der Oberseite mit dem Fahrzeug schwenkbar (7) verbindbar ist, und eine untere Klappe (4), die an der Unterseite mit dem Fahrzeug schwenkbar und lösbar (8) verbindbar ist. Die Unterseite der oberen Klappe (3) ist mit der Oberseite der unteren Klappe (4) lösbar verbindbar (Abb. 3).

## Beschreibung

Die Erfindung betrifft eine Heckklappe für ein Fahrzeug, insbesondere für ein Kraftfahrzeug.

Aus der DE 196 35 873 C2 ist eine Heckklappe für ein Kraftfahrzeug bekannt, die an der Oberseite mit dem Kraftfahrzeug schwenkbar verbunden ist.

Weiterhin sind Heckklappen für Kraftfahrzeuge bekannt, die eine obere Klappe und eine untere Klappe umfassen, wobei die obere Klappe an der Oberseite und die untere Klappe an der Unterseite mit dem Kraftfahrzeug schwenkbar verbunden sind. Wenn die obere Klappe geöffnet ist, kann auch die untere Klappe geöffnet werden.

Aufgabe der Erfindung ist es, eine Heckklappe für ein Fahrzeug, insbesondere für ein Kraftfahrzeug, vorzuschlagen, die vielseitiger geöffnet werden kann.

Erfindungsgemäß wird diese Aufgabe durch die Merkmale des Anspruchs 1 gelöst. Die Heckklappe umfaßt eine obere Klappe, die an der Oberseite mit dem Fahrzeug schwenkbar verbindbar oder verbunden ist, und eine untere Klappe, die an der Unterseite mit dem Fahrzeug schwenkbar verbindbar oder verbunden ist. Die Unterseite der oberen Klappe ist mit der Oberseite der unteren Klappe lösbar verbindbar. Ferner ist die Unterseite der unteren Klappe mit dem Fahrzeug lösbar verbindbar.

Wenn die Unterseite der oberen Klappe mit der Oberseite der unteren Klappe verbunden ist, und wenn die Unterseite der unteren Klappe von dem Fahrzeug gelöst ist, bilden die obere Klappe und die untere Klappe eine einzige Heckklappe, die an der Oberseite mit dem Fahrzeug schwenkbar verbunden ist und die durch eine Verschwenkung insgesamt geöffnet werden kann.

Wenn die Unterseite der oberen Klappe von der Oberseite der unteren Klappe gelöst ist, und wenn die untere Klappe an der Unterseite mit dem Fahrzeug schwenkbar verbunden ist, können die obere Klappe und die untere Klappe jeweils gesondert verschwenkt werden.

Hierdurch wird im Ergebnis eine Drei-Wege-Heckklappe für ein Fahrzeug, insbesondere für ein Kraftfahrzeug, geschaffen, die sich im gesamten öffnen läßt, die aber auch geteilt nach oben und nach unten geöffnet werden kann.

Vorteilhafte Weiterbildungen sind den Unteransprüchen beschrieben.

Die Klappen können durch Schachtverriegelungen lösbar verriegelbar sein.

Vorteilhaft ist es, wenn die untere Klappe an einer oder beiden Seiten mit dem Fahrzeug lösbar verriegelbar ist.

Nach einer weiteren vorteilhaften Weiterbildung umfaßt die obere Klappe und/oder die untere Klappe eine Rahmenstruktur.

Vorzugsweise umfassen die Rahmenstrukturen Metallpreßteile und/oder Metallhohlprofile. Die Rahmenstrukturen können aus Metallpreßteilen und/oder Metallhohlprofilen bestehen. Bei dem Metall handelt es sich vorzugsweise um eine Leichtmetalllegierung, insbesondere eine Aluminiumlegierung.

Eine weitere vorteilhafte Weiterbildung ist dadurch gekennzeichnet, daß die Klappen, insbesondere die Rahmenstrukturen, durch eine oder mehrere Verschweißungen gefügt sind.

Stattdessen oder zusätzlich können die Klappen bzw. die Rahmenstrukturen mit einem Strukturkleber verklebt sein.

Vorteilhaft ist es, wenn eine oder beide Klappen, insbesondere eine oder beide Rahmenstrukturen, einen vorzugsweise angeformten Bördelflansch aufweisen. Der angeformte Bördelflansch kann insbesondere an einem Hohlprofil der unteren Klappe vorgesehen sein. An dem Bördelflansch kann die vorzugsweise metallische Außenhaut umgebördelt werden.

Eine weitere vorteilhafte Weiterbildung ist dadurch gekennzeichnet, daß eine oder beide Klappen, insbesondere eine oder beide Rahmenstrukturen, einen vorzugsweise angeformten Klebeflansch aufweisen. Der Klebeflansch ist vorzugsweise an einem Hohlprofil der oberen Klappe vorgesehen. Auf dem Klebeflansch kann die Heckscheibe verklebt werden.

Nach einer weiteren vorteilhaften Weiterbildung umfaßt die obere Klappe ein oberes Verstärkungsteil. Dabei handelt es sich vorzugsweise um ein metallisches Preßteil. An dem oberen Verstärkungsteil kann insbesondere eine obere, vorzugsweise metallische, Spoilerabdeckung befestigt werden.

Die Erfindung betrifft ferner ein Fahrzeug, insbesondere ein Kraftfahrzeug, das durch eine erfindungsgemäße Heckklappe gekennzeichnet ist.

Ein Ausführungsbeispiel der Erfindung wird nachstehend anhand der beigefügten Zeichnung im einzelnen erläutert. In der Zeichnung zeigt
- Abb. 1: eine vorbekannte Heckklappe, die an der Oberseite mit einem Kraftfahrzeug schwenkbar verbunden ist, in einer perspektivischen Ansicht,
- Abb. 2: eine vorbekannte Heckklappe, die eine obere Klappe und eine untere Klappe umfaßt, in einer perspektivischen Ansicht,
- Abb. 3: ein Ausführungsbeispiel der Erfindung in einer perspektivischen Ansicht,
- Abb. 4: die Heckklappe gemäß Abb. 3 in einer vergrößerten Darstellung,
- Abb. 5: eine obere metallische Spoilerabdeckung und eine metallische Außenhaut,
- Abb. 6: einen Schnitt längs der Linie A-A in Abb. 4 und
- Abb. 7: einen Schnitt längs der Linie B-B in Abb. 4.

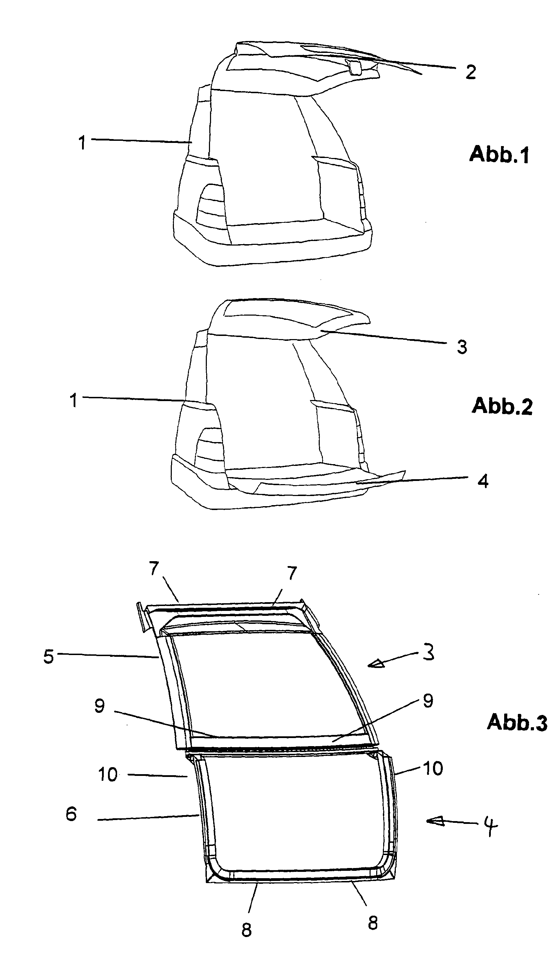

In Abb. 1 ist eine bekannte Heckklappe 2 gezeigt, die im oberen Dachbereich mit Scharnieren an der Karosserie 1 eines Kraftfahrzeugs befestigt ist und die sich über die Drehachse der Scharniere nach oben öffnen läßt.

Abb. 2 zeigt eine weitere bekannte Heckklappe für ein Kraftfahrzeug, die mittig geteilt ist. Die obere Klappe 3 läßt sich nach oben öffnen, und die untere Klappe 4 kann nach unten geöffnet werden.

Die Abb. 3 bis 7 dargestellte Heckklappe gemäß der Erfindung umfaßt eine obere Klappe 3, die an ihrer Oberseite mit Drehscharnieren 7 im oberen Dachbereich an der Karosserie 1 befestigt und mit dem Fahrzeug schwenkbar verbunden ist, und eine untere Klappe 4, die an ihrer Unterseite über Scharnierschlösser 8 an der Karosserie 1 befestigt und mit dem Fahrzeug schwenkbar verbunden ist. Die Unterseite der unteren Klappe 4 ist ferner von dem Fahrzeug lösbar. Hierzu sind die Scharnierschlösser 8 derart ausgestaltet, daß sie eine Lösung der unteren Klappe 4 von der Karosserie 1 und damit vom Fahrzeug ermöglichen. Schließlich ist die Unterseite der oberen Klappe 3 mit der Oberseite der unteren Klappe 4 lösbar verbindbar.

In Abb. 3 ist die geschlossene Stellung gezeigt. Hier ist die Unterseite der oberen Klappe 3 mit der Oberseite der unteren Klappe 4 verbunden. Ferner ist die Unterseite der unteren Klappe 4 mit dem Fahrzeug verbunden.

Wenn die Heckklappe als Ganzes geöffnet werden soll, wird die in Abb. 3 gezeigte Verbindung zwischen der Unterseite der oberen Klappe 3 und der Oberseite der unteren Klappe 4 beibehalten. Die Verbindung zwischen der Unterseite der unteren Klappe 4 mit dem Fahrzeug wird gelöst. Die gesamte Heckklappe, bestehend aus der oberen Klappe 3 und der unteren Klappe 4, die miteinander verbunden sind, kann dann um die Drehscharniere 7 nach oben verschwenkt und geöffnet werden. Im Endergebnis wird damit eine Öffnung wie in Abb. 1 erreicht.

Wenn die Teile der Heckklappe geöffnet werden sollen, wird die schwenkbare Verbindung der Unterseite der unteren Klappe 4 mit dem Fahrzeug beibehalten. Die Verbindung zwischen der Unterseite der oberen Klappe 3 und der Oberseite der unteren Klappe 4 wird gelöst. Dann kann die obere Klappe 3 um die Drehscharniere 7 nach oben verschwenkt und geöffnet werden, und die untere Klappe 4 kann um die Scharnierschlösser 8 nach unten verschwenkt und geöffnet werden. Im Endergebnis wird die in Abb. 2 gezeigte Stellung erreicht. Durch die Erfindung können die beiden bekannten Öffnungsvarianten, die in Abb. 1 und 2 dargestellt sind, realisiert werden. Ergänzend zu den bekannten Öffnungsvarianten vereint die Erfindung als Drei-Wege-Heckklappe beide Varianten zu einer einzigen Variante.

Die obere Klappe 3 umfaßt eine Rahmenstruktur 5. Der von der Rahmenstruktur 5 gebildete obere Heckklappenrahmen wird mit den Drehscharnieren 7 im oberen Dachbereich an der Karosserie 1 befestigt.

Die untere Klappe 4 umfaßt eine Rahmenstruktur 6. Der von der Rahmenstruktur 6 gebildete untere Heckklappenrahmen wird über die Scharnierschlösser 8 an der Karosserie 1 lösbar befestigt. Die Scharnierschlösser 8 ermöglichen eine Verschwenkung des unteren Heckklappenrahmens 6.

Die beiden Heckklappenrahmen 5, 6 sind im Schachtbereich über Schachtverriegelungen 9 lösbar verbunden, nämlich lösbar verriegelt. Weiterhin ist der untere Heckklappenrahmen 6 seitlich über Schlösser 10 mit der Karosserie 1 lösbar verbunden, nämlich lösbar verriegelt.

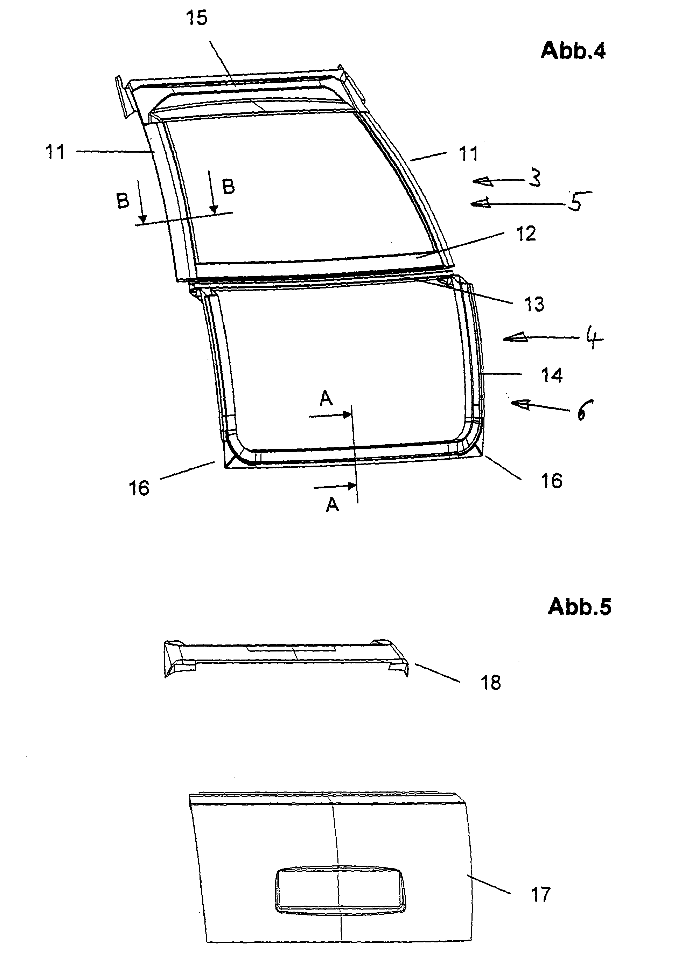

Wie in Abb. 4 gezeigt, besteht der obere Heckklappenrahmen 5 aus einer Rahmenstruktur, die aus einem Metallpreßteil 15 an seiner Oberseite und Metallhohlprofilen 11, 12 an den Seiten und an der Unterseite besteht. Die Metallpreßteile 15 und - hohlprofile 11, 12 sind aus einer Leichtmetalllegierung, im Beispielsfall aus Aluminium, hergestellt.

Der untere Heckklappenrahmen 6 besteht aus einer Rahmenstruktur, die aus Metallpreßteilen 16 an der unteren Ecken und Metallhohlprofilen 13, 14 besteht. Das Metallhohlprofil 13 befindet sich an der Oberseite. Das Metallhohlprofil 14 ist U-förmig gebogen und bildet die Seiten und die Unterseite. Die Metallpreßteile 16 und - hohlprofile 13, 14 sind aus einer Leichtmetalllegierung, im Beispielsfall aus Aluminium, hergestellt.

Die Heckklappenrahmen 5, 6 werden durch ein Schweißverfahren gefügt.

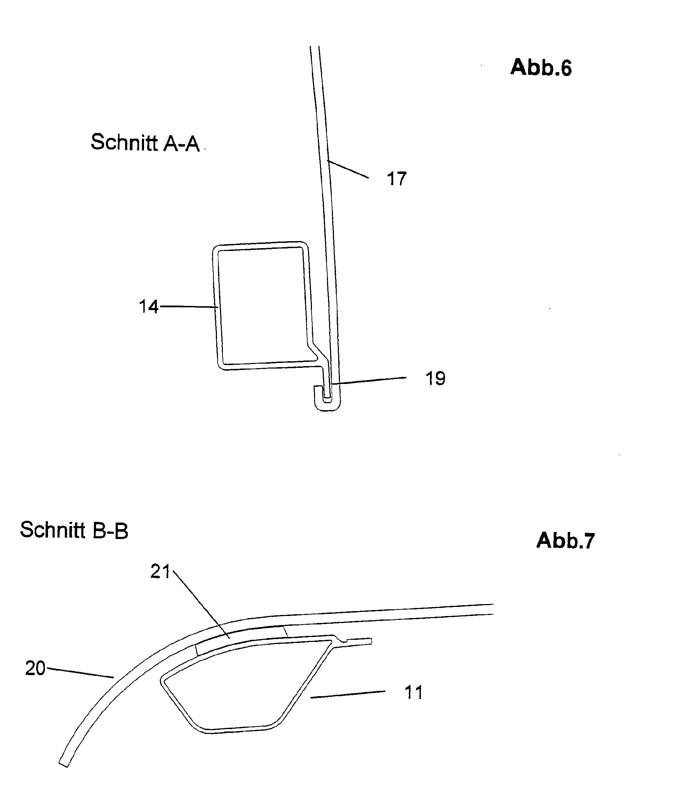

Wie insbesondere aus Abb. 6 ersichtlich, besitzt das Hohlprofil 14 des unteren Heckklappenrahmens 6 einen angeformten Bördelflansch 19, an dem die metallische Außenhaut 17, die im Beispielsfall aus Aluminium besteht, umgebördelt werden kann.

Aus Abb. 7 ist ersichtlich, daß das Hohlprofil 11 des oberen Heckklappenrahmens 5 einen angeformten Klebeflansch 21 aufweist, auf dem die Heckscheibe 20 verklebt werden kann.

Das obere Verstärkungsteil 15 des oberen Heckklappenrahmens 5 besteht aus einem metallischen Preßteil 15, im Beispielsfall aus Aluminium, an dem die obere metallische Spoilerabdeckung 18, die in Abb. 5 dargestellt ist und die im Beispielsfall aus Aluminium besteht, befestigt werden kann. Stattdessen oder zusätzlich können an dem oberen Verstärkungsteil 15 weitere Funktionselemente angebracht werden, beispielsweie eine GPS-Antenne, Wischer, Bremsleuchten und ähnliches.

Wie erläutert, ist es vorteilhaft, wenn die Rahmenstrukturen 5, 6 aus stranggepreßten Leichtmetallhohlprofilen 11, 12, 13, 14, vorzugsweise aus Aluminium, und aus Leichtmetall-Preßteilen 15, 16, ebenfalls vorzugsweise aus Aluminium, bestehen. Es ist allerdings auch möglich, daß die Rahmenstrukturen 5, 6 aus rollprofilierten Hohlprofilen 11, 12, 13, 14, vorzugsweise aus Stahl, und aus Preßteilen 15, 16, vorzugsweise aus Stahl, bestehen. Die Rahmenstrukturen 5, 6 können mit einem Schweißverfahren gefügt sein. Es ist allerdings auch möglich, daß die Rahmenstrukturen 5, 6 mit einem Strukturkleber verklebt sind. Die untere Rahmenstruktur 6 weist vorzugsweise eine Außenhaut 17 aus Leichtmetall, vorzugsweise aus Aluminium, auf. Die obere Rahmenstruktur 5 weist vorzugsweise eine Spoilerabdeckung 18 aus Leichtmetall, vorzugsweise aus Aluminium, auf. Es ist allerdings auch möglich, daß die untere Rahmenstruktur 6 eine Außenhaut 17 aus Kunststoff und/oder die obere Rahmenstruktur 5 eine Spoilerabdeckung 18 aus Kunststoff besitzt.

Auf die obere Rahmenstruktur 5 kann eine Fahrzeugverglasung 20 verklebt sein. An der oberen Rahmenverstärkung 15 und/oder an der Spoilerabdeckung 18 können weitere Funktionselemente wie beispielsweise GPS-Antenne, Wischer, Bremsleuchte und ähnliches angebracht werden.

## Patentansprüche

1. Heckklappe für ein Fahrzeug,
**gekennzeichnet durch**
eine obere Klappe (3), die an der Oberseite mit dem Fahrzeug schwenkbar (7) verbindbar ist,
und eine untere Klappe (4), die an der Unterseite mit dem Fahrzeug schwenkbar und lösbar (8) verbindbar ist, wobei die Unterseite der oberen Klappe (3) mit der Oberseite der unteren Klappe (4) lösbar verbindbar (9) ist.

2. Heckklappe nach Anspruch 1, **dadurch gekennzeichnet, daß** die Klappen (3, 4) durch Schachtverriegelungen (9) lösbar verriegelbar sind.

3. Heckklappe nach Anspruch 1 oder 2, **dadurch gekennzeichnet, daß** die untere Klappe (4) an einer oder beiden Seiten mit dem Fahrzeug lösbar verriegelbar (10) ist.

4. Heckklappe nach einem der vorhergehenden Ansprüche, **dadurch gekennzeichnet, daß** die obere Klappe (3) und/oder die untere Klappe (4) eine Rahmenstruktur (5, 6) umfassen.

5. Heckklappe nach Anspruch 4, **dadurch gekennzeichnet, daß** die Rahmenstrukturen (5, 6) Metallpreßteile (15, 16) und/oder Metallhohlprofile (11, 12, 13, 14) umfassen.

6. Heckklappe nach einem der vorhergehenden Ansprüche, **dadurch gekennzeichnet, daß** die Klappen (3, 4), insbesondere die Rahmenstrukturen (5, 6), durch eine oder mehrere Verschweißungen gefügt sind.

7. Heckklappe nach einem der vorhergehenden Ansprüche, **dadurch gekennzeichnet, daß** die Klappen (3, 4), insbesondere die Rahmenstrukturen (5, 6), mit einem Strukturkleber verklebt sind.

8. Heckklappe nach einem der vorhergehenden Ansprüche, **dadurch gekennzeichnet, daß** eine oder beide Klappen (3, 4), insbesondere eines oder beide Rahmenstrukturen (5, 6), einen vorzugsweise angeformten Bördelflansch (19) aufweisen.

9. Heckklappe nach einem der vorhergehenden Ansprüche, **dadurch gekennzeichnet, daß** eine oder beide Klappen (3, 4), insbesondere eines oder beide Rahmenstrukturen (5, 6), einen vorzugsweise angeformten Klebeflansch (21) aufweisen.

10. Heckklappe nach einem der vorhergehenden Ansprüche, **dadurch gekennzeichnet, daß** die obere Klappe (3) ein oberes Verstärkungsteil (15) umfaßt.

11. Fahrzeug, insbesondere Kraftfahrzeug, **gekennzeichnet durch** eine Heckklappe nach einem der Ansprüche 1 bis 10.
